# EUROPEAN PATENT SPECIFICATION

(11) **EP 3 185 463 B1**
(45) Date of publication and mention of the grant of the patent: **14.08.2019**
(21) Application number: 15020257.0
(22) Date of filing: 21.12.2015
(51) Int. Cl.: H04L 9/08

(54) **APPARATUS AND METHOD FOR QUANTUM KEY DISTRIBUTION WITH ENHANCED SECURITY AND REDUCED TRUST REQUIREMENTS**
VORRICHTUNG UND VERFAHREN ZUR QUANTENSCHLÜSSELVERTEILUNG MIT ERHÖHTER SICHERHEIT UND REDUZIERTEN VERTRAUENSANFORDERUNGEN
APPAREIL ET PROCÉDÉ DE DISTRIBUTION DE CLÉ QUANTIQUE AVEC UNE SÉCURITÉ AMÉLIORÉE ET EXIGENCES DE CONFIANCE RÉDUITES

(43) Date of publication of application: 28.06.2017
(73) Proprietor: ID Quantique S.A., 1227 Carouge (CH)
(72) Inventor: Ribordy, Grégoire, 1256 Troinex (CH)
(74) Representative: KATZAROV S.A.

(56) References cited:
- BORIS KORZH ET AL: "A high-speed multi-protocol quantum key distribution transmitter based on a dual-drive modulator", OPTICS EXPRESS, vol. 21, no. 17, 13 August 2013 (2013-08-13), page 19579, XP055282280, DOI: 10.1364/OE.21.019579
- PHILIP SIBSON ET AL: "Integrated Photonic Devices for Quantum Key Distribution", CLEO: 2015, 15 May 2015 (2015-05-15), page FF1A.6, XP055282279, Washington, D.C. DOI: 10.1364/CLEO_QELS.2015.FF1A.6 ISBN: 978-1-55752-968-8
- HANNES R B\{O}HM ET AL: "Exploiting the randomness of the measurement basis in quantum cryptography: Secure Quantum Key Growing without Privacy Amplification", ARXIV.ORG, CORNELL UNIVERSITY LIBRARY, 201 OLIN LIBRARY CORNELL UNIVERSITY ITHACA, NY 14853, 30 August 2004 (2004-08-30), XP080164413,
- VALERIO SCARANI ET AL: "The Security of Practical Quantum Key Distribution", ARXIV.ORG, CORNELL UNIVERSITY LIBRARY, 201 OLIN LIBRARY CORNELL UNIVERSITY ITHACA, NY 14853, 28 February 2008 (2008-02-28), XP080402341,

## Description

### TECHNICAL FIELD

The present invention relates generally to the field of quantum key distribution, and more precisely to an apparatus and method enhancing the security of a quantum key distribution (QKD) system.

### BACKGROUND & PRIOR ART

The primary goal of Quantum Cryptography or Quantum Key Distribution (QKD) is to be able to share between an emitter and a receiver a sequence of bits whose privacy can be proven with a limited set of assumptions.

If two users possess shared random secret information (herebelow called the "key"), they can achieve, with provable security, two of the goals of cryptography: 1) making their messages unintelligible to an eavesdropper and 2) distinguishing legitimate messages from forged or altered ones. A one-time pad cryptographic algorithm achieves the first goal, while Wegman-Carter authentication achieves the second one. Unfortunately both of these cryptographic schemes consume key material and render it unfit for further use. It is thus necessary for the two parties wishing to protect the messages they exchange with either or both of these cryptographic techniques to devise a way to exchange fresh key material. The first possibility is for one party to generate the key and to inscribe it on a physical medium (disc, CD-ROM, rom) before passing it to the second party. The problem with this approach is that the security of the key depends on the fact whether it has been protected during its entire lifetime, from its generation to its use, until it is finally discarded. In addition, it is unpractical and very tedious.

Because of these difficulties, in many applications one resorts instead to purely mathematical methods allowing two parties to agree on a shared secret over an insecure communication channel. Unfortunately, all such mathematical methods for key agreement rest upon unproven assumptions, such as the difficulty of factoring large integers. Their security is thus only conditional and questionable. Future mathematical development may prove them totally insecure.

Quantum cryptography or Quantum Key Distribution (QKD) is a method allowing the distribution of a secret key between two distant parties, the emitter and the receiver, with a provable security. An explanation of the method can be found in Nicolas Gisin, Grégoire Ribordy, Wolfgang Tittel, and Hugo Zbinden, "Quantum Cryptography", Rev. of Mod. Phys. 74, (2002), the content of which is supposed to be known to a person skilled in the art. The two parties encode the key on elementary quantum systems, such as photons, which they exchange over a quantum channel, such as an optical fiber. The security of this method comes from the well-known fact that the measurement of the quantum state of an unknown quantum system modifies the system itself. In other words, a spy eavesdropping on the quantum communication channel cannot get information on the key without introducing errors in the key exchanged between the emitter and the receiver.

Equivalently, QKD is secure because of the no-cloning theorem of quantum mechanics, which ensures that a spy cannot duplicate the transmitted quantum system and forward a perfect copy to the receiver.

### • Principle

Several QKD protocols exist. These protocols describe two parts:
1- how the bit values are encoded on quantum systems using sets of quantum states and
2- how the emitter and the receiver cooperate to produce a secret key from the measurement of qubits. The most commonly used of these protocols, which was also the first one to be invented, is known as the Bennett - Brassard 84 protocol (BB84), disclosed by Charles Bennett and Gilles Brassard in Proceedings IEEE Int. Conf. on Computers, Systems and Signal Processing, Bangalore, India (IEEE, New York, 1984), pp. 175-179), the content of which is supposed to be known to the man of the art as well. This example can be used to illustrate the two parts cited above.
   1- Using for example polarization states, the emitter encodes each bit on a two-level quantum system either as an eigenstate of the horizontal-vertical basis ("+"-basis) or as an eigenstate of the diagonal basis ("x"-basis). One says that the bits are encoded in two incompatible bases. Prior to exchanging quantum systems, the emitter and the receiver agree on a logical assignment of bit values with basis states. In one example of a logical bit assignment, they decide that "1" bit value is coded as a vertical state ¦I> (horizontal-vertical basis) and as a +45° state ¦/> (diagonal basis). In this case, the "0" bit value is coded as a horizontal state ¦-> (horizontal-vertical basis) or a -45° state ¦\> (diagonal basis).
   2- For each bit, the emitter uses an appropriate random number generator to generate two random bits of information, which are used for determining the bit value (one random bit) and the basis information (one random bit). The quantum system is sent to the receiver, who analyses it in one of the two bases. The receiver uses an appropriate random number generator to produce a random bit of information used for determining the measurement basis (the basis information). The measurement basis is selected randomly for each quantum system. After the exchange of a large number of quantum systems, the emitter and the receiver perform a procedure called basis reconciliation or also known as sifting. In a first step, the emitter announces to the receiver, over a conventional and public communication channel, which is called service channel, the basis + or x in which each quantum system was prepared. In a second step, the receiver considers the basis compatibility for each qubit. When the receiver has used the same basis as the emitter for his measurement, he knows that the bit value he has measured must be the one which was sent over by the emitter. He indicates publicly (through the service channel) for which quantum systems this condition is fulfilled. Measurements for which the wrong basis was used are simply discarded. In the absence of a spy, the sequence of bits shared is error free. Although a spy who wants to get some information about the sequence of bits that is being exchanged can choose between several attacks, the laws of quantum physics guarantee that he will not be able to do so without introducing a noticeable perturbation in the key.

However in a practical setting, errors can also be generated by experimental imperfections. Therefore, all protocols are complemented by a key distillation protocol running over the service channel which typically consists of an error correction step and a privacy amplification step, and where classical communications are authenticated.

There exists several QKD protocols (see Gisin et al. for a good overview) and these QKD protocols can be grouped in families, where all protocols in a family can be implemented with the same hardware. As an example, all protocols based on four qubit states, which are the eigenstates of two conjugated basis, form one family of protocols. An illustration of this example is given by the BB84 and the SARG protocols (see Valerio Scarani, Antonio Acín, Grégoire Ribordy, and Nicolas Gisin (2004). "Quantum Cryptography Protocols Robust against Photon Number Splitting Attacks for Weak Laser Pulse Implementations"), which belong to the previously described same family. In this case, only the basis reconciliation (or sifting) step changes from one protocol to another. As explained above, in the case of BB84 protocol, the receiver announces the random bit value used for the choice of the measurement basis, whereas the bit value of the measured qubit is kept secret. When the emitter announces the compatibility of the basis, the emitter and the receiver know that their respective bit values used for the definition or obtained with the measurement of the qubit are identical. In the case of SARG protocol, the sifting is different. The receiver announces the bit value of the measured qubit and the bit value used for the choice of the measurement basis is kept secret. The emitter announces when he is able to guess the secret bit value of the receiver with his two bit values (one is the bit value carried by the qubit; the other one defines the basis of this qubit).

Contrary to other approaches for key distribution, QKD offers provable security based on the laws of quantum physics. While this is true for ideal QKD systems, practical hardware may include imperfections which lead to information leakage. Such imperfections could even be introduced by a malevolent manufacturer, which intends to fool the users of its products.

Trusting the manufacturer of a system may not be appropriate in all situations. This problem is also well known in the field of conventional cryptography. As an example, in the case of the Advanced Encryption Standard for example, one can achieve this goal by modifying the substitution box (S-box) used in its SubBytes step. By doing this, it is possible to obtain a plurality of algorithms that share the AES structure but are different. After modification of the S-boxes, the user is the only party that knows the actual encryption algorithm used. Nevertheless, the same kind of solution has not been developed for Quantum Cryptography.

It would be desirable in Quantum Key Distribution to lower the possibility to introduce weaknesses in the system such as backdoors. Moreover another issue is that most of the attacks on QKD systems defined in Quantum hacking are optimally defined for a specific QKD protocol. One way to deal with these issues is for the manufacturer to include in its products the possibility to modify some of the security-relevant parameters. This modification is typically done by the user after the equipment has left the manufacturer's premises, so that the modified parameters are known by the user only.

However, this approach is not compatible with the QKD concept as it is considered in the prior art. Actually, one of the main assumptions in QKD proofs is that the protocol is fully known by anybody (e.g. a spy). Once the protocol has been chosen, everybody knows all parameter values except the values of the random bits that will be used for the choice of qubit states generation or analysis. Introducing extra unknown variables might be needed due to the differences that may occur between QKD principle and its implementation. One such approach has been considered in the patent related to gate suppression EP 2625817 which discloses a solution preventing an eavesdropper from taking control on the single photon of a QKD apparatus. In this case, random values, unknown by the customer but maybe known by the QKD manufacturer, are introduced in order to randomly change the efficiency value of this detector. This type of solution enables to enhance QKD security from eavesdropping attempts by introducing random parameters that are unknown from the eavesdropper. Nevertheless this type of solution which enables to enhance security from eavesdropping attempts doesn't address certain security issues from the customer point of view. A customer who wants to be secured against his QKD manufacturer might ask for the possibility to change some of the security-relevant parameters of his QKD apparatus in such a way that the manufacturer cannot know in advance. The prior art doesn't allow QKD users to modify QKD system parameters in such a way that they are unknown to the QKD manufacturer in advance.

The defined invention intends to overcome this issue.

### Non-patent literature includes:

- Nicolas Gisin, Grégoire Ribordy, Wolfgang Tittel, and Hugo Zbinden, (2002) "Quantum Cryptography", Rev. of Mod. Phys. 74,
- C. H. Bennett and G. Brassard. "Quantum cryptography: Public key distribution and coin tossing". In Proceedings of IEEE International Conference on Computers, Systems and Signal Processing, volume 175, page 8. New York, 1984.
- Valerio Scarani, Antonio Acín, Grégoire Ribordy, and Nicolas Gisin (2004). "Quantum Cryptography Protocols Robust against Photon Number Splitting Attacks for Weak Laser Pulse Implementations"

### SUMMARY OF THE INVENTION AND DEFINITION OF THE TECHNICAL ISSUE

One way to deal with the previously described issue is to include in QKD products the possibility of modifying some of the security-relevant parameters. This modification is typically done by the user after the equipment has left the manufacturer's premises, so that the modified parameters are known by the user only. An example of such parameter modification in the field of conventional cryptography is offered by the use of a custom encryption algorithm. In this case of conventional cryptography, the idea is to modify some parameters of the encryption algorithm, while keeping its general structure as presented in the background section.

The object of this invention is to apply the same principle to QKD by modifying some parameters used to define the implemented protocol. Doing so makes it more difficult for an adversary to mount an implementation attack and extract useful information. It also enables the user to modify its system in a way unknown to the product manufacturer and thereby to increase its protection against attacks based on product characteristics.

The invention therefore relates to an apparatus of Quantum Key Distribution for exchanging at least one quantum key, comprising an Emitter including a QKD controller and a QKD transmitter, a Receiver including a QKD controller and a QKD receiver, one service channel for Emitter and Receiver synchronization and sifting step realization, one Quantum Channel for exchanging Qubits, wherein Emitter and Receiver are adapted to receive customization parameters and customization parameter respectively, wherein the QKD system is adapted to support at least two protocols P1 and P2, wherein the QKD system is adapted to switch from a first protocol P1 to a second protocol P2.

Preferably, the QKD controller includes at least two sub-controllers, controller 1, controller 2 and a switch (113).

Preferably, the choice of the protocol can be defined thanks to digital values stored in the equipment manufacturer parameters or in the customization parameters.

Preferably, sequences of protocols Pi are defined by blocks of length Li of Qubits.

Preferably, protocol switch is realized during QKD operation.

Preferably, difference between supported protocols is defined at the sifting step.

A second aspect of the invention relates to a method of use of customization parameters within the QKD apparatus and comprising the steps of Defining customization parameter values in QKD controller and Reading and storing customization parameters for one qubit Use of customization parameters for the sifting of said qubit and storage of the new sifted key, Analyzing whether the sifted key is large enough, Realizing distillation of the stored sifted key if the sifted key is large enough.

### BRIEF DESCRIPTION OF THE DRAWINGS

Preferred embodiments of the invention are described in the following with reference to the drawings, which illustrate preferred embodiments of the invention without limiting the same. In the drawings,
Figure 1: Invention apparatus based on QKD system with additional parameter
Figure 2: Invention apparatus with blocks of different protocols
Figure 3: Specific case of Protocol blocks with different logical bit value assignment
Figure 4: Method associated to the implementation of the invention apparatus

### DESCRIPTION OF PREFERRED EMBODIMENTS

### Invention description is based on several figures

The primary object of the invention is to enhance the security offered by a QKD system and to reduce the trust requirements of a QKD user toward the equipment manufacturer.

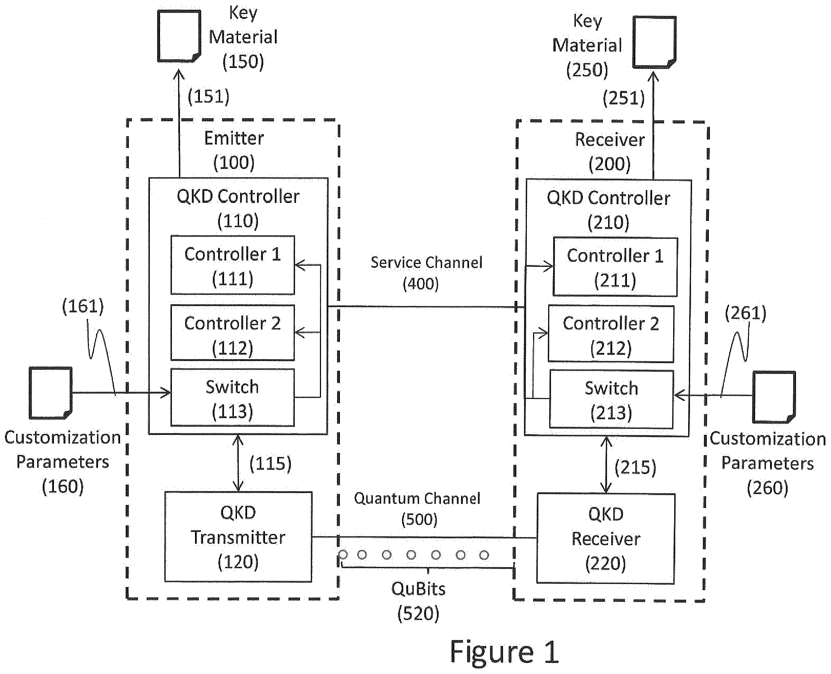

As shown in Figure 1, this invention can be used to securely exchange encryption keys between an emitter (100) and a receiver (200). It is based on a traditional QKD system modified to accept an additional customization parameter. The hardware of the QKD system consists of a QKD transmitter (120) and a QKD receiver (220) connected through a quantum channel a quantum channel (500). The QKD transmitter (120) and receiver (220) typically consist of optical and electronic components adapted to produce and detect a stream of qubits (520). The QKD transmitter (120) and receiver (220) are controlled by QKD controllers (110 and 210) through communications lines (115 and 215). These controllers consist for example of one or several microprocessors or computers as well as software. The QKD controllers (110 and 210) are connected through a service channel (400). The service channel is a communication channel enabling the controllers to exchange a series of messages. They can for example consist of an Internet connection or a direct optical link.

The QKD controllers (110 and 210) control the operation of the QKD transmitter (120) and receiver (220) to launch the exchange of the sequence of qubits (520).

The QKD controller (110) in the Emitter (100) comprises a series of sub-controllers able to run the QKD apparatus with different protocols. In figure 1, the case of an apparatus running two different protocols is shown. However, this case can be extended to any integer value. In figure 1, the QKD controller (110) comprises a controller 1 (111) enabling the QKD system to operate with Protocol 1, a controller 2 (112) enabling the QKD system to operate with Protocol 2 and a switch (113) which controls the transition from protocol 1 to protocol 2. Similarly, the QKD controller (120) at the Receiver (200) comprises a controller 1 (211) enabling the QKD system to operate with Protocol 1, a controller 2 (212) enabling the QKD system to operate with Protocol 2 and a switch (213) which controls the transition from protocol 1 to protocol 2.

The QKD controller (110) records the list of qubits (520) transmitted. Similarly the QKD controller (210) records the measurement basis and the detection result, if any, for each qubit (520). The QKD controllers (110 and 210) then run a protocol known as the sifting by exchanging messages on the service channel (400) to produce the sifted key. This protocol typically implies the comparison qubit by qubit of the preparation and measurement basis for the sequence of qubits (520). In the absence of eavesdropping and experimental imperfections, the sifted key of the emitter (100) and receiver (200) are exactly identical.

Assuming that the error rate in the sifted key is lower than a threshold value, the QKD controllers (110 and 210) can then distill this sifted into shared key material (150 and 250). This distillation phase typically includes an error correction step and a privacy amplification step, but other steps can also be used. The key material (150 and 250) consists of a sequence of bits, which is output by the QKD controllers (110 and 220), through communication lines (151 and 251). The communication line (151) can for example be implemented with a serial communication link carried by copper wires linking the QKD controller (110) and an apparatus of the customer through which the customization parameters (160) are defined. The amount of information that an eavesdropper can have obtained on this key material (150 and 250) can be bounded to an arbitrarily small value, provided that the eavesdropper complies with the laws of physics.

This QKD system, consisting of emitter (100) and receiver (200) is capable of implementing a plurality of QKD protocols forming a family of protocols. In a first embodiment of this invention it is modified to accept the introduction of a customization parameter (160) through the communication line (161) into the QKD controller (110) of the emitter (100). The customization parameter (160) can for example be implemented as a digital value defining the protocol that the QKD apparatus should use for the secret key exchange. Similarly, a customization parameter (260) is introduced in the QKD controller (210) of the QKD controller (210) of the receiver (200) through the communication line (261). The customization parameters (260) and the communication line (261) can be implemented as the customization parameters (160) and the communication line (161). Depending on the embodiment, the customization parameters (160 and 260) will be identical or different. In the previous example, Customization parameter (160) enables a user to actuate a switch (113). Switch (113) activates alternatively either controller 1 (111) thus activating Protocol 1 or controller 2 (112) thus activating Protocol 2 on the QKD system.

In each QKD controller (110) and (120), a set of default parameters is stored in a memory. If at least one of the two QKD controllers (110) or (120) doesn't receive any customization parameters (160) or (260), the default parameters are used to adjust the switches (113) and (213) in a default configuration that allows the QKD device to run, even though no customization parameters are defined. E.g., the QKD apparatus (100) and (200) run with the controllers 1 (111) and (211) continuously.

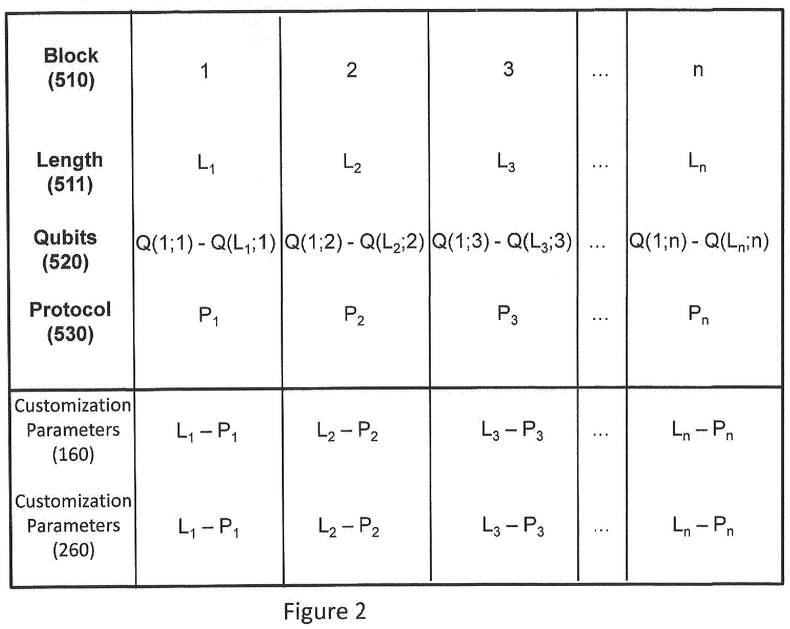

Figure 2 illustrates a first possible use of the customization parameters (160 and 260). The qubits (520) exchanged over the quantum channel (500) are grouped into blocks (510) consisting of at least one qubit and whose length Lᵢ (511), where 'i' represents the index of the block, specified in number of qubits, can be identical or different. This grouping can be predefined in the emitter (100) and transmitter (200) by the equipment manufacturer. Alternatively, it can be specified in the customization parameters (160 and 260). For each, block (510) of qubits (520), a QKD protocol (530), selected from the family of protocols that can be implemented using the emitter (100) and transmitter (200) is used. The list of protocols (530) used for the different blocks can be predefined in the emitter (100) and transmitter (200) by the equipment manufacturer. Alternatively, it can be specified in the customization parameters (160 and 260). The implementation of this invention requires the possibility to use at least two protocols (530). One possible embodiment is based on the use of the BB84 and the SARG protocols. These two protocols can be implemented using the same QKD transmitter (120) and receiver (220) hardware. The only difference lays in the implementation of the sifting step in the QKD controllers (110) and (210), which makes these protocols particularly well suited for the implementation of the invention.

Depending on the selected protocols (530) of the family of protocols that can be implemented using QKD transmitter (120) and receiver (220), some physical parameters of the qubits (520) may be different for each protocol. In this case, these parameters can be adjusted block by block. Alternatively, a single set of values, which is suitable albeit not optimum, for all protocols may be used.

One example of such adjustment, when selecting between the BB84 and SARG protocols, is, assuming that weak laser pulses are used as qubits (520), the mean photon number of the said qubits (520). The optimum average photon number differs for the BB84 and SARG protocols. It is possible for the emitter (100) to adjust the mean photon number for a particular block of the blocks (510) according to the protocol associated to this protocol. Alternatively, the emitter (100) could also set the mean photon number of the qubits (520) to the value corresponding to the worst case of the protocols being used.

Following the production of sifted key for each of the blocks (510) using the QKD controllers (110 and 210), this key material must be distilled. One typically prefers to use large blocks of bits for this distillation in order to optimize performance. A first approach to key distillation is to collate all the blocks of sifted key corresponding to a particular protocol in a larger block which is then distilled. This approach offers the possibility to optimize the distillation parameters for the key material produced using each of the protocols. Another approach is to combine the blocks of sifted key corresponding to at least two protocols into a larger block, which is then distilled. With this approach, the distillation parameters must be adjusted to a value which is suitable for all the protocols, although it may not be optimum for one or several of the protocols. After key distillation, the key material (150) and (250) is, just like in the case of traditional QKD, made available to external applications, such as for example link encryption, using the communication lines (151) and (251). The advantage of this invention is that the user has the ability to modify the operation of the emitter (100) and receiver (200) after it has left the premises of the manufacturer, and thus reduce the trust requirements toward the equipment manufacturer. The invention may also make it more difficult for an external attacker to mount an implementation attack, as he would not know, for a particular qubit, against which protocol the attack should be mounted.

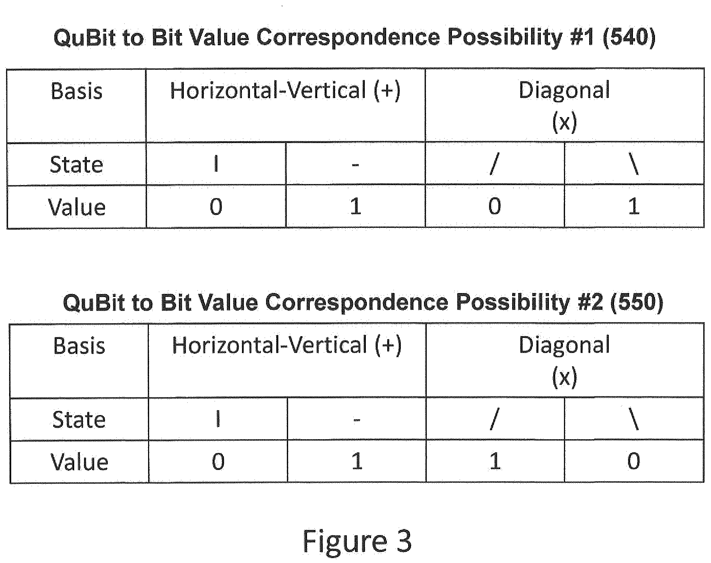

In a second embodiment of the invention, the protocols (520) used for the blocks (510) are implemented using different qubit to bit value assignments. Two examples of such assignments are shown in figure 3, for the case where variations of the BB84 protocol are used. BB84 protocol relies on two sets of two states. A binary bit value is assigned to each state of these sets and it is possible to change this assignment. In Figure 3, the main difference between qubit to Bit Value Correspondence possibility #1 (540) and #2 (550) is for the Diagonal basis. This assignment can be predefined in the emitter (100) and transmitter (200) by the equipment manufacturer. Alternatively, it can be specified in the customization parameters (160 and 260). For each, block (510) of qubits (520), a particular bit value assignment is specified. The list of bit value assignments used for the different blocks can be predefined in the emitter (100) and transmitter (200) by the equipment manufacturer. Alternatively, it can be specified in the customization parameters (160 and 260). The choice of the bit value assignment can be defined thanks to a digital value stored in the equipment manufacturer (100 and 200) or in the customization parameters (160 and 260). The other aspects of this second embodiment are identical to those of the first embodiment. In this second embodiment of the invention, the bit value assignment is the parameter used to change the protocol.

A third embodiment consists of a combination of the first and second embodiments, where both the protocol and bit value assignment are modified block by block.

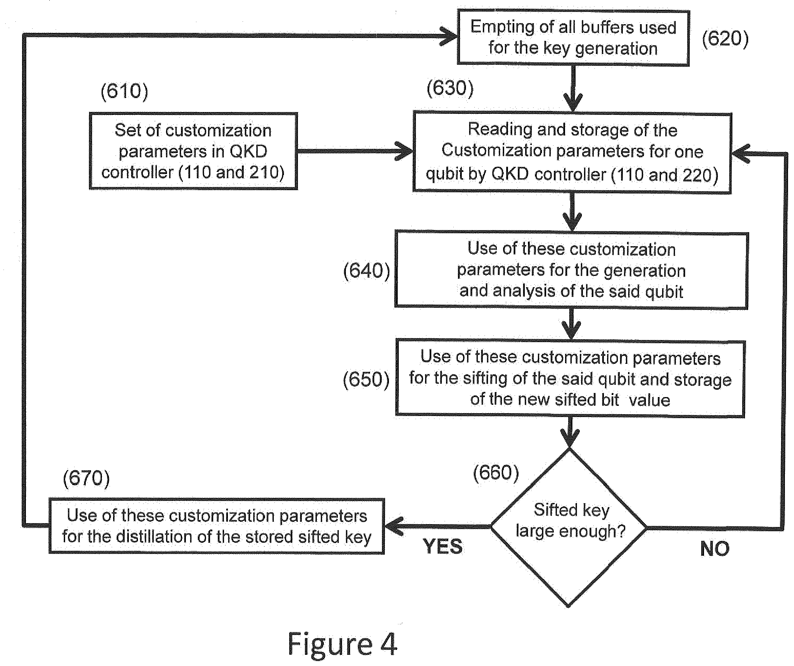

Figure 4 shows a method (600) of use of the customization parameters with the QKD apparatus (100) and (200). In a first step (610), QKD controllers (110) and (210) receive the customization parameters from the customer. This reception can be made blocks by blocks or in continuous. The reception throughput should be sufficient compared to the throughput need of the QKD apparatus. In parallel to this step (610), the QKD controllers (110) and (210) start a loop process. In a first step (620) of this loop process, all buffers used in the QKD controllers are emptied. In a second step (630), the QKD controllers read and store the value of the customization parameters for one qubit. For example, the customization parameters define that the protocol used for the said qubit is BB84 or SARG. In a third step (640), these customization parameters are used by the QKD controllers to send the proper parameter values to the QKD transmitters (120) and (220). This is done by the proper sub-controller (111) or (112) selected by the switch (113). For example, the generation and analysis of the qubit will be performed with respect to the chosen protocol BB84 or SARG. In a fourth step (650), the customization parameters are used by the QKD controllers (110) and (210) define how to perform the sifting of the said qubit. This is done by the proper sub-controller (111) or (112) selected by the switch (113). For example, the sifting can be performed as it is defined in the BB84 or the SARG protocols. This new sifted bit value is stored in the QKD controllers (110) and (210). In a fifth step (660), the QKD controllers verify if the number of stored sifted bits is large enough to start the distillation. If it is not the case, the method goes back to step (630) to prepare the exchange of another qubit. If the number of stored sifted bits is large enough, the distillation is started. In a sixth step (670), the customization parameters are used by the QKD controllers (110) and (210) to perform the key distillation in a proper way. This is done by the proper sub-controller (111) or (112) selected by the switch (113). For example, the sifted bits are sorted two groups, one corresponding to the use of BB84 for the qubit exchange and sifting process, another one corresponding to the use of SARG. And then, the two groups of bit are distillated with respect to their group protocol. Then, the method (600) loops back to the step (620) where the key generation started and all buffers are emptied

One of the aspects that is not part of the invention, but that is essential to its working is the synchronization of the two lists of customization parameters. Indeed, for the proper working of this invention, the emitter (100) and the receiver (200) need to switch onto the same sub-controller in their respecting QKD controller (110) or (120) for each qubit. The following paragraphs describe some techniques that can be used in order to perform this task.

Corresponding value of customization parameters (160) and (260) must be available to the emitter (100) and receiver (200) and there exists two approaches to ensure this availability. In a first approach, the parameters are manually distributed between the emitter (100) and (200). The traditional implementation of QKD requires the distribution of a pre-shared secret used for the authentication of the communications taking place over the service channel (400) during the first QKD session. It is possible to append the customization parameters (160) and (260) to this pre-shared secret and to manually distribute this information to the emitter (100) and receiver (200).

A second approach to ensure the availability of the customization parameters (160) and (260) to the emitter (100) and receiver (200) is to assign the local selection of the customization to one of the parties (100 or 200) and to have this party transfer this information to its partner. This transmission can take place in encrypted format using an encryption key, in order to prevent interception of this information by a malevolent party. This transmission can take prior to the exchange of qubits (520) or after this transmission. In this second case, a malevolent party will not have access to the customization parameters (160 and 260) during the exchange of the qubits (520) and will not be able to use this information to select which information to mount. This asynchrony may be used to alleviate the requirements for the transmission of the said customization parameters (160 and 260) in encrypted format.

The said customization parameters (160 and 260) can be used directly to define the exact customization of the QKD system, such as for example the grouping of qubits (520) into blocks (510) as well as the protocol assigned to each block. Alternatively, these customization parameters (160 and 260) can be postprocessed and expanded using an algorithmic process to produce the exact customization. An example of such algorithmic expansion consists of a pseudo random number generator where the customization parameters (160 and 260) are used as seeds.

Finally, the customization parameters (160 and 260) can be renewed during the operation of the QKD system by using some of the key material (150 and 250) produced by the system. This key material can either be used as new customization parameters or used to encrypt the transmission of new values of the customization parameters.

While the present invention is described above in connection with preferred embodiments, it will be understood that it is not so limited to the described or illustrated embodiments, but by the scope of the appended claims.

## Claims

1. An apparatus of Quantum Key Distribution for exchanging at least one quantum key, comprising
an Emitter (100) including a QKD controller (110) and a QKD transmitter (120)
a Receiver (200) including a QKD controller (120) and a QKD receiver (220)
one service channel (400) for Emitter (100) and Receiver (200) synchronization and sifting step realization,
one Quantum Channel (500) for exchanging blocks of at least one Qubit between the emitter and the receiver,
wherein the QKD apparatus is adapted to support at least two different protocols P1 and P2 and comprises a switch for switching between the said at least two different protocols, and the Emitter (100) and the Receiver (200) are adapted to receive customization parameters (160) and customization parameters (260), respectively, defining a choice of protocol among the at least two protocols P1 and P2,
wherein the difference between the supported protocols is defined at the distillation step, and
**characterized in that** the protocol switch is realized during QKD operation.

2. An apparatus based on claim 1 wherein sequences of qubits exchanged according to the at least two different protocols P1 and P2 are defined by blocks of length Li of Qubits.

3. An apparatus based on claim 1 wherein qubit to bit value assignment is dependent on qubit blocks.

4. An apparatus based on claim 1 wherein the choice of the protocol can be defined thanks to default parameters stored in the equipment manufacturer parameters (100 and 200) or in the customization parameters (160 and 260).

5. An apparatus based on claim 1 wherein protocol P1 and P2 implemented differ in logical assignment of bit values.

6. An apparatus based on claim 1 wherein difference between supported protocols is defined at the distillation step

7. A method of operating the QKD apparatus of claim 1 comprising the steps of:
- a starting step comprising running a QKD operation between an emitter (100) and a receiver (200) according to a protocol chosen from at least two different protocols P1 and P2, said QKD operation comprising
- exchanging blocks of at least one Qubit between the emitter and the receiver,
- realizing a synchronization of the Emitter (100) and Receiver (200) and
- realizing a sifting step;
- a receiving step where the Emitter (100) and the Receiver (200) receive customization parameter values defining a choice of protocol among at least two protocols P1 and P2,
- a switching step comprising switching between the said at least two different protocols P1 and P2 according to the customization parameter values,
**characterized in that** the protocol switch is realized during QKD operation.

## Patentansprüche

1. Vorrichtung zur Quantenschlüsselverteilung für den Austausch zumindest eines Quantenschlüssels, umfassend
einen Sender (100) enthaltend ein QKD-Steuergerät (1 10) und einen QKD-Sender (120)
einen Empfänger (200) enthaltend ein QKD-Steuergerät (120) und einen QKD-Empfänger (220)
einen Dienstkanal (400) für die Synchronisation des Senders (100) und des Empfängers (200) und die Durchführung eines Sifting-Schritts,
einen Quantenkanal (500) für den Austausch von Blöcken von mindestens einem Qubit zwischen dem Sender und dem Empfänger,
wobei die QKD-Vorrichtung dazu geeignet ist, zumindest zwei unterschiedliche Protokolle P1 und P2 zu unterstützen und einen Schalter zum Umschalten zwischen den zumindest zwei unterschiedlichen Protokollen umfasst, und der Emitter (100) und der Empfänger (200) dazu geeignet sind, jeweils Anpassungsparameter (160) und Anpassungsparameter (260) zu empfangen, die eine Protokollauswahl aus den zumindest zwei Protokollen P1 und P2 definieren,
wobei der Unterschied zwischen den unterstützten Protokollen in dem Destillationsschritt definiert wird, und
**dadurch gekennzeichnet, dass** die Protokollumschaltung während des QKD-Vorgangs realisiert wird.

2. Vorrichtung nach Anspruch 1, wobei die Sequenzen von Qubits, die gemäß den zumindest zwei unterschiedlichen Protokollen P1 und P2 ausgetauscht werden, durch Blöcke der Länge Li von Qubits definiert sind.

3. Vorrichtung nach Anspruch 1 wobei die Qubit-/-BitWert-Zuweisung von den Qubit-Blöcken abhängig ist.

4. Vorrichtung nach Anspruch 1, wobei die Auswahl des Protokolls durch Standardparameter definiert werden kann, die in den Gerätewerksparametern (100 und 200) oder in den Anpassungsparametern (160 und 260) gespeichert sind.

5. Vorrichtung nach Anspruch 1, wobei die implementierten Protokolle P1 und P2 sich in der logischen Zuweisung von Bitwerten unterscheiden.

6. Vorrichtung nach Anspruch 1, wobei der Unterschied zwischen den unterstützten Protokollen in dem Destillationsschritt definiert wird.

7. Verfahren zum Betreiben der QKD-Vorrichtung nach Anspruch 1, umfassend die folgenden Schritte:
- einen Startschritt umfassen das Ausführen eines QKD-Vorgangs zwischen einem Sender (100) und einem Empfänger (200) gemäß einem Protokoll, das aus zumindest zwei unterschiedlichen Protokollen P1 und P2 ausgewählt ist, wobei der QKD-Vorgang umfasst
- Austauschen von Blöcken von mindestens einem Qubit zwischen dem Sender und dem Empfänger,
- Durchführen einer Synchronisation des Senders (100) und des Empfängers (200) und
- Durchführen eines Sifting-Schritts;
- einen Empfangsschritt, in dem der Sender (100) und der Empfänger (200) Anpassungsparameterwerte empfangen, die eine Auswahl des Protokolls aus zumindest zwei Protokollen P1 und P2 definieren,
- einen Umschaltschritt umfassend das Umschalten zwischen den zumindest zwei unterschiedlichen Protokollen P1 und P2 gemäß den Anpassungsparameterwerten,
**dadurch gekennzeichnet, dass** die Protokollumschaltung während des QKD-Vorgangs realisiert wird.

## Revendications

1. Appareil de Distribution de Clé Quantique pour échanger au moins une clé quantique, comprenant
un Emetteur (100) comportant un contrôleur QKD (110) et un transmetteur QKD (120)
un Récepteur (200) comportant un contrôleur QKD (120) et un récepteur QKD (220)
un canal de service (400) pour une synchronisation d'Emetteur (100) et de Récepteur (200) et une réalisation d'étape de tamisage,
un Canal Quantique (500) pour échanger des blocs d'au moins un bit quantique entre l'émetteur et le récepteur,
dans lequel l'appareil QKD est adapté pour prendre en charge au moins deux protocoles différents P1 et P2 et comprend un commutateur pour commuter entre lesdits au moins deux protocoles différents, et l'Emetteur (100) et le Récepteur (200) sont adaptés pour recevoir des paramètres de personnalisation (160) et des paramètres de personnalisation (260), respectivement, définissant un choix de protocole parmi les au moins deux protocoles P1 et P2,
dans lequel la différence entre les protocoles pris en charge est définie à l'étape de distillation, et
**caractérisé en ce que** la commutation de protocole est réalisée durant une opération QKD.

2. Appareil selon la revendication 1, dans lequel des séquences de bits quantiques échangées selon les au moins deux protocoles différents P1 et P2 sont définies par des blocs de longueur Li de bits quantiques.

3. Appareil selon la revendication 1, dans lequel l'attribution de valeur de bit quantique à bit dépend des blocs de bit quantique.

4. Appareil selon la revendication 1, dans lequel le choix du protocole peut être défini grâce à des paramètres par défaut stockés dans les paramètres du fabricant de l'équipement (100 et 200) ou dans les paramètres de personnalisation (160 et 260).

5. Appareil selon la revendication 1, dans lequel les protocoles P1 et P2 mis en oeuvre diffèrent dans l'attribution logique de valeurs de bit.

6. Appareil selon la revendication 1, dans lequel la différence entre les protocoles pris en charge est définie à l'étape de distillation.

7. Procédé de fonctionnement de l'appareil QKD de la revendication 1 comprenant les étapes suivantes :
- une étape de démarrage comprenant l'exécution d'une opération QKD entre un émetteur (100) et un récepteur (200) selon un protocole choisi parmi au moins deux protocoles différents P1 et P2, ladite opération QKD comprenant
- l'échange de blocs d'au moins un bit quantique entre l'émetteur et le récepteur,
- la réalisation d'une synchronisation de l'Emetteur (100) et du Récepteur (200) et
- la réalisation d'une étape de tamisage ;
- une étape de réception dans laquelle l'Emetteur (100) et le Récepteur (200) reçoivent des valeurs de paramètres de personnalisation définissant un choix de protocole parmi au moins deux protocoles P1 et P2,
- une étape de commutation comprenant la commutation entre lesdits au moins deux protocoles différents P1 et P2 selon les valeurs de paramètres de personnalisation, **caractérisé en ce que** la commutation de protocole est réalisée durant une opération QKD.
